# EUROPEAN PATENT APPLICATION

(11) **EP 1 107 563 A2**
(43) Date of publication of application: **13.06.2001**
(21) Application number: 00125020.8
(22) Date of filing: 16.11.2000
(51) Int. Cl.: H04M 19/04

(54) **Light emitting display on a portable communication device for incoming phone calls**

(30) Priority: 06.12.1999 CN 99240943
(71) Applicant: Chong, Sze-Huen, Singapore 139462 (SG)
(72) Inventor: Chong, Sze-Huen, Singapore 139462 (SG)
(74) Representative: Kandlbinder, Markus Christian (DE)

(57) **Abstract**

A light emitting display on a mobile phone for incoming phone calls comprises an electro luminescent lamp, and a control circuit to mount on the battery of the mobile phone. The control circuit further comprises a signal receive unit, an automatic control unit, a reverse changed voltage rising unit, and switching drive unit.

## Description

### BACKGROUND OF THE INVENTION

### 1. Field of The Invention:

The present invention relates to a light emitting display on a portable communication device for incoming phone calls. In particular, the present invention relates to a display with electro luminescent lamp on a cellular phone and on related attachment thereof to signal incoming phone calls.

### 2. Description of Related Art:

Presently, a communication device usually provides a screen to display signals of incoming phone calls. But, the screen on the communication device has an outer surface of light emitter only with a plain color. Alternatively, the outer surface on the screen is provided with a color same as the casing of the communication device, however the color can not be changed and are easy to become worn out.

### SUMMARY OF THE INVENTION

A primary object of the present invention is to provide a light emitting display on a communication device for incoming phone calls, which is made of electro luminescent lamp to generate various bright movable figures and remind the user in case of the communication device receiving incoming communication signals.

Another object of the present invention is to provide a light emitting display on a communication device for incoming phone calls, which offers the communication device a new dynamic appearance.

A further Object of the present invention is to provide a light emitting display on a communication device for incoming phone calls, which may be made to be independent of the communication device itself.

### BRIEF DESCRIPTION OF THE DRAWINGS

The detail structure, the applied principle, the function and the effectiveness of the present invention can be more fully understood by referring to the following description and accompanying drawings, in which:
Fig. 1A is a plan view of a light emitting display on a communication device for incoming phone calls according to the present invention illustrating the display in a state of not receiving any signal of incoming phone call;
Fig. 1B is another plan view of a light emitting display on a communication device for incoming phone calls according to the present invention illustrating the display in a state of receiving a signal of incoming phone call;
Fig. 2 is a block diagram illustrating the principle of a control circuit in the present invention;
Fig. 3 is a circuit diagram illustrating a circuit layout of the present invention embodied in a mobile phone; and
Figs. 4A to 4C are wave diagrams illustrating signals generated in the control circuit with respective to time.

### DETAILED DESCRIPTION OF THE PREFERRED EMBODIMENT

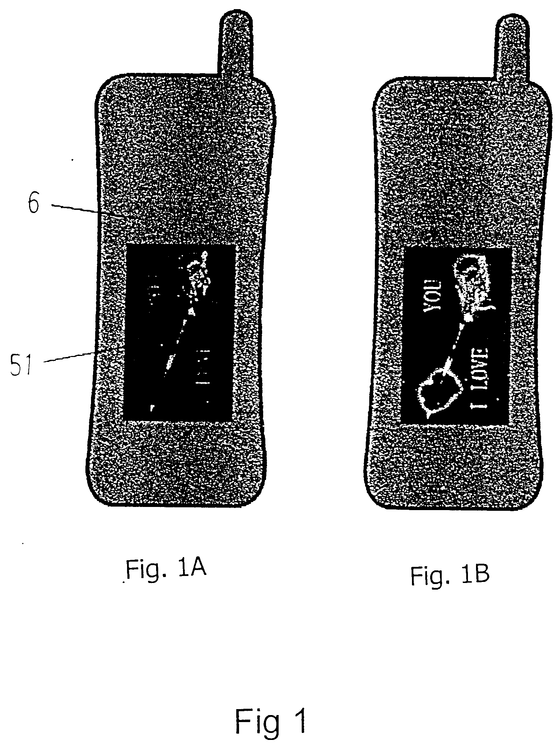

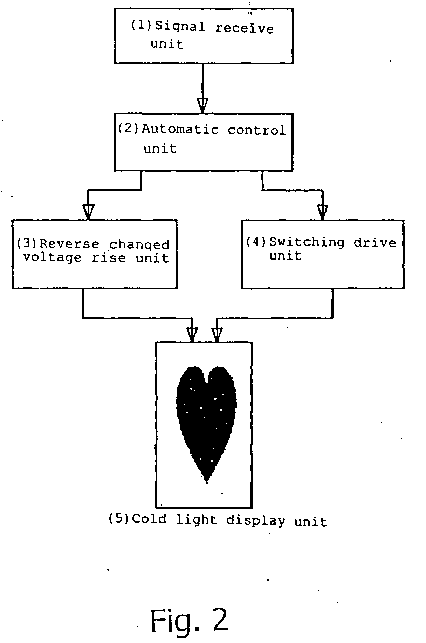

Referring to Figs. 1A, 1B, and 2, a light emitting display on a portable communication device such as a cellular phone for incoming phone calls comprises an electro luminescent lamp 51 and a control circuit. The electro luminescent lamp 51 is mounted on a battery 6 of the portable communication device and connects with the control circuit. The control circuit further comprises a signal receive unit 1, an automatic control unit 2, a voltage reversed rising unit 3, and a switching driver unit 4 and these units are connected to the luminescent lamp display unit 5 sequentially. Therefore, the luminescent lamp 51 attached to the communication device can generate various movable figures based on above said arrangement to remind the user while a communication signal is received. Meanwhile, the display of movable figures offers a personalized outer casing on the communication device. It can be seen that Fig. 1A shows the light emitting display of the present invention is in a state of not receiving any phone call and Fig. 1B is in a state of having received a phone call.

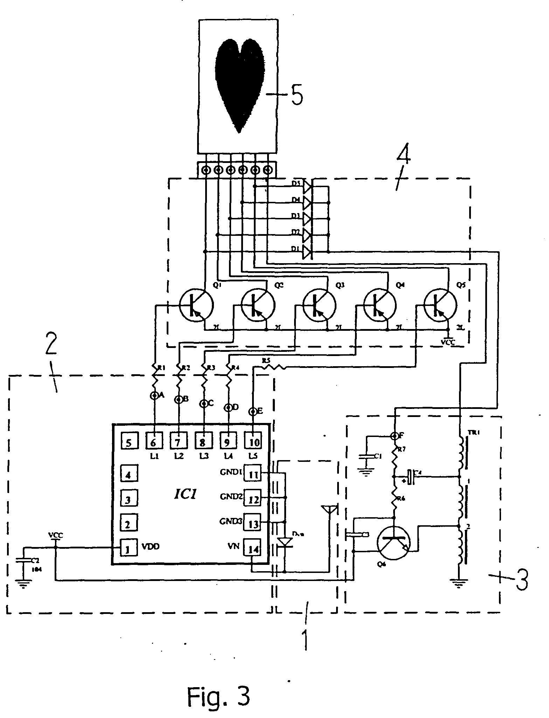

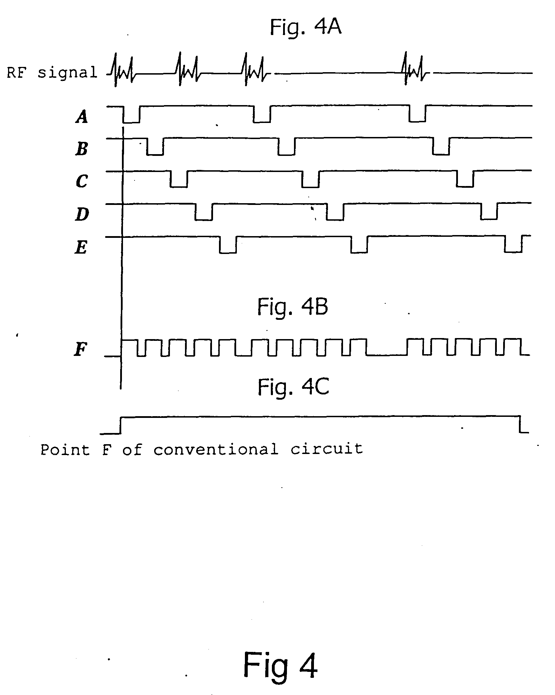

Referring to Fig. 3 and Figs. 4A to 4C, when a RF signal is emitted by the mobile phone and sensed by DVN, the RF signal is triggered by a VN terminal of IC1 and filtered in the IC1 to generate a trigger signal after being regulated. The trigger signal controls an internal oscillation circuit to send out a flash signal and an internal timer circuit is started. Once a preset value of time duration is reached, the flash is ceased and each part of the circuit is shut down at the same time. In this way, the circuit is in a state of waiting with low power consumption. The flash signal sent out by the internal oscillation circuit passes through L1-L5 in a respective way A, B, C, D, and E shown in Fig. 4A to output signals Q1-Q5 respectively. D1-D5 are started at each electro luminescent flash stage and the voltage rise circuit 3 with frequency change, i.e., the point F has voltage at the time of L1-L5 being in a state of flash. R6, R7, C3, C4, Q6, and TR1 consist in an oscillation driving circuit and the oscillation driving circuit begins to oscillate for sending out the voltage required by the electro luminescent lamp while point F receives a control signal. The wave of voltage at point F is shown in Fig. 4B and point F is an impulse wave to decrease the current at the time of driving. For a conventional control circuit, the voltage at point F is a control voltage for direct current as shown in Fig. 4C such that it may result in an increased current in the circuit under load. Under the same driving load, the working current needed in case of Fig. 4B may save 10mA∼20mA.

While the invention has been described with referencing to a preferred embodiment thereof, it is to be understood that modifications or variations may be easily made without departing from the spirit of this invention, which is defined by the appended claims.

## Claims

1. A light emitting display on a mobile phone for incoming phone calls, comprising
an electro luminescent lamp, being provided on the mobile phone;
a control circuit, being provided in the mobile phone; and
a battery, being provided in the mobile phone either.

2. The light emitting display on a mobile phone and for incoming phone calls as defined in claim 1, wherein the electro luminescent lamp is mounted on the battery.

3. The light emitting display on a mobile phone for incoming phone calls as defined in claim 1, wherein the control circuit is set on the battery and further comprises a signal receive unit, an automatic control unit, a reverse changed voltage rising unit, switching drive unit, and an electro luminescent lamp display unit.

4. The light emitting display on a mobile phone for incoming phone calls as defined in claim 1, wherein the cold light plate connects with the control circuit and with the battery respectively to use the same power supply as the mobile phone itself.
